# EUROPEAN PATENT APPLICATION

(11) **EP 4 656 262 A1**
(43) Date of publication of application: **03.12.2025**
(21) Application number: 23918497.1
(22) Date of filing: 21.09.2023
(51) Int. Cl.: A63F 13/24, G06F 3/0338

(54) **INPUT DEVICE**

(30) Priority: 25.01.2023 JP 2023009540
(71) Applicant: Sony Interactive Entertainment Inc., Tokyo 108-0075 (JP)
(72) Inventor: MORITA, Masaho, Tokyo 108-0075 (JP); AOYANAGI, Yoshihiro, Tokyo 108-0075 (JP); SUZUKI, Kazuyuki, Tokyo 108-0075 (JP)
(74) Representative: Fish & Richardson P.C.
(86) International application number: PCT/JP2023/034324
(87) International publication number: WO 2024/157540

(57) **Abstract**

Provided is an input device configured to enable an increase in the degree of freedom regarding the positions and shapes of light-emitting portions.

The input device includes an exterior plate (21) containing a material having light transmittance properties, a light-diffusing portion (31) facing a lower surface of the exterior plate (21), and a light-shielding layer (23) formed on one of the lower surface (21d) of the exterior plate (21) and the light-diffusing portion (31), the light-shielding layer (23) having formed therein a plurality of light-transmitting openings (23a) each forming a corresponding one of a plurality of light-emitting portions (E1 to E5). A control apparatus (51) selectively causes a plurality of light sources (S1 to S5) to emit light on the basis of information to be presented to a user.

## Description

### TECHNICAL FIELD

The present disclosure relates to an input device.

### BACKGROUND ART

PTLs described below disclose input devices to be utilized for game operation. These input devices have a plurality of light-emitting portions on the upper surfaces thereof.

In a case where a plurality of users simultaneously execute a game, numbers may be assigned to the respective users. The input device of PTL 1 includes a light-diffusing member disposed on the rear side of the touchpad. Through selective illumination at a plurality of positions (light-emitting portions) defined in this light-diffusing member, the number assigned to each user is displayed. In PTL 2, holes are formed in the corner portions of the exterior plate that forms the surface of the touchpad. A light-diffusing member is formed below these holes. When the light-diffusing member is irradiated with light from light sources, the light exits through the holes from the exterior plate upward.

### CITATION LIST

### Patent Literature

[PTL 1] U.S. Patent No. 11534682
[PTL 2] U.S. Patent Application Publication No. 2022/040567

### SUMMARY

### Technical Problem

In the structure of PTL 1, there is a problem in that since the light-diffusing member is disposed over the entire rear edge of the exterior plate of the touchpad, it is difficult to control the range of light emission on the light-diffusing member. For example, there may arise a problem in that the illuminated area spreads widely in the left-right direction. Therefore, there are significant constraints on the positions of the light-emitting portions (the distance between two adjacent light sources).

In the structure of PTL 2, since it is necessary to form holes through which light passes in the exterior plate, the illuminated area (light-emitting portions) is limited by the sizes of the holes. Large holes deteriorate the appearance of the input device, and hence it is sometimes difficult to form holes of a size that is easily visible to the user.

### Solution to Problem

An input device proposed in the present disclosure includes an exterior plate containing a material having light transmittance properties, the exterior plate having a first surface forming a part of an outer surface of the input device, and a second surface facing opposite to the first surface in a first direction that is a thickness direction of the exterior plate, a plurality of light sources, one or a plurality of light-diffusing portions having a third surface facing the second surface of the exterior plate in the first direction and configured to receive light from the plurality of light sources, a light-shielding layer formed on one of the second surface of the exterior plate and the third surface of the one or plurality of light-diffusing portions, the light-shielding layer having formed therein a plurality of openings each forming a corresponding one of a plurality of light-emitting portions, and a control apparatus configured to selectively cause the plurality of light sources to emit light on the basis of information to be presented to a user.

This input device enables an increase in the degree of freedom regarding the positions and shapes of the light-emitting portions and an improvement in the visual recognizability of the light-emitting portions by the user. Furthermore, since the light-shielding layer is positioned between the light-diffusing portions and the exterior plate, the light-emitting portions (the openings of the light-shielding layer) are less visible when the light sources do not light up. Therefore, it is possible to prevent the user from misrecognizing information presented to the user through the light-emitting portions.

### BRIEF DESCRIPTION OF DRAWINGS

[FIG. 1A] FIG. 1A is a plan view illustrating an example of an input device proposed in the present disclosure.
[FIG. 1B] FIG. 1B is an enlarged view of the main parts of the input device illustrated in FIG. 1A.
[FIG. 2A] FIG. 2A is an exploded perspective view of an input pad and is a view of the parts of the input pad viewed from above.
[FIG. 2B] FIG. 2B is an enlarged view of the rear part of an input pad frame illustrated in FIG. 2A.
[FIG. 3A] FIG. 3A is an exploded perspective view of the input pad and is a view of the parts of the input pad viewed from below.
[FIG. 3B] FIG. 3B is an enlarged view of the rear part of an exterior plate illustrated in FIG. 3A.
[FIG. 4] FIG. 4 is a sectional view taken along the line IV-IV illustrated in FIG. 1.
[FIG. 5] FIG. 5 is a block diagram illustrating an example of the configuration of the input device.
[FIG. 6] FIG. 6 is a sectional view illustrating a modified example of the input device, with a cutting position similar to that of FIG. 4.
[FIG. 7] FIG. 7 is a view illustrating the function of a protruding portion formed on the exterior plate.
[FIG. 8] FIG. 8 is a sectional view illustrating still another modified example of the input device, with a cutting position similar to that of FIG. 4.

### DESCRIPTION OF EMBODIMENTS

Now, an input device proposed in the present disclosure is described with reference to the drawings. In the present disclosure, an input device 10 is described as an example.

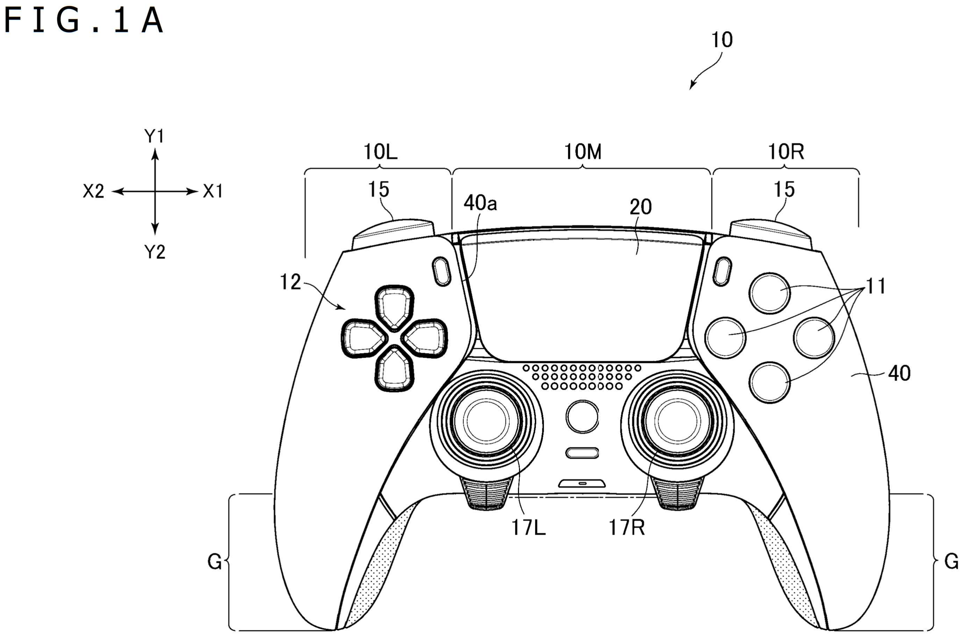

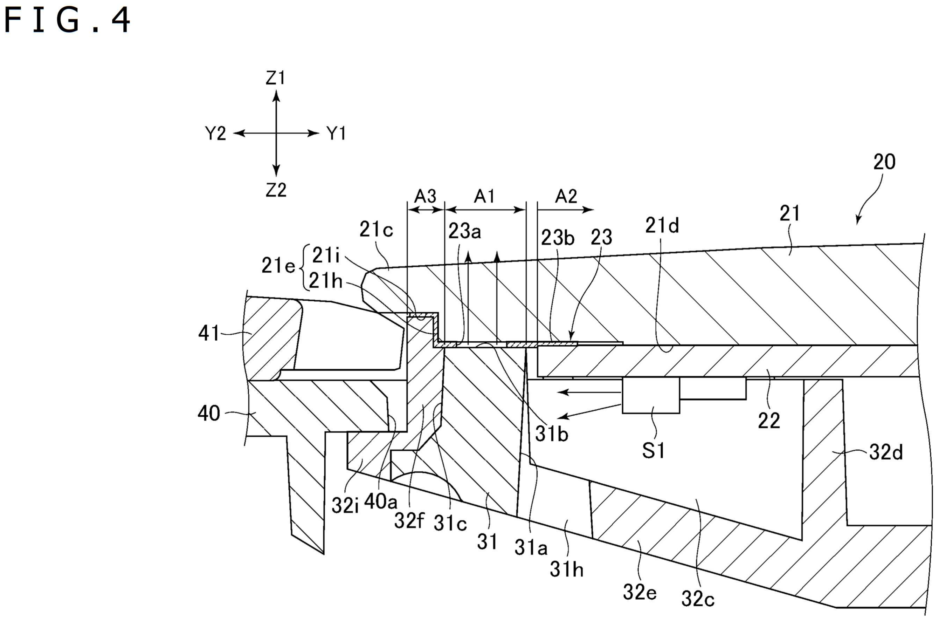

In the following, the Y1 and Y2 directions illustrated in FIG. 1A and the like are referred to as the forward direction and the rearward direction, respectively, and the X1 and X2 directions are referred to as the rightward direction and the leftward direction, respectively. Furthermore, the Z1 and Z2 directions illustrated in FIG. 4 are referred to as the upward direction and the downward direction, respectively.

The input device 10 is utilized as an input device for an information processing apparatus having a game program execution function, a moving image reproduction function, a communication function via the Internet, and the like. The input device 10 incorporates various sensors (such as an acceleration sensor and a gyro sensor), which are utilized for detection of the posture and movement of the input device 10, a battery, and the like. The input device 10 is capable of communicating with the information processing apparatus and transmits signals corresponding to operations made by a user on the input device 10 and signals corresponding to the posture and movement of the input device 10 to the information processing apparatus. The communication with the information processing apparatus may be wireless or wired. The information processing apparatus may be a server apparatus to be connected to the input device 10 via the Internet.

### [Input Member]

The input device 10 is, for example, a device that the user holds with both hands and operates. As illustrated in FIG. 1A, the input device 10 has a right held section 10R to be held with the right hand and a left held section 10L to be held with the left hand. Input members are disposed on the upper surface of the right held section 10R and the upper surface of the left held section 10L. For example, four input buttons 11 positioned at the vertices of a rhombus are disposed on the upper surface of the right held section 10R. A cross-shaped directional pad 12 is disposed on the upper surface of the left held section 10L. The right held section 10R and the left held section 10L may each have an input button 15 protruding in the forward direction of the right held section 10R and the left held section 10L.

As illustrated in FIG. 1A, the right held section 10R and the left held section 10L each have a grip portion G extending in the rearward direction from the region in which the input members on the upper surface (in the example of the input device 10, the directional pad 12 and the four input buttons 11) are disposed. The input device 10 has a central section 10M positioned between the right held section 10R and the left held section 10L. The grip portion G of each of the held sections 10R and 10L extends in the rearward direction beyond the rear end of the central section 10M.

As illustrated in FIG. 1A, the input device 10 includes an input pad 20 that is a plate-shaped input member. The input pad 20 is disposed on the upper surface of the central section 10M, for example. The input pad 20 is positioned between the input members disposed on the upper surface of the right held section 10R (specifically, the four input buttons 11) and the input member disposed on the upper surface of the left held section 10L (specifically, the directional pad 12). The input device 10 further includes input sticks 17R and 17L positioned in the rearward direction of the input pad 20.

The shape of the input device proposed in the present disclosure is not limited to the example of the input device 10 illustrated in FIG. 1A. For example, the rear end of the central section 10M may reach the rear ends of the held sections 10R and 10L. That is, each of the held sections 10R and 10L may not have the grip portion G extending in the rearward direction.

As still another example, the input device may be one to be operated with one hand. For example, the input device may be rod-shaped. In this case, the input device may include the input pad 20 at a position at which the input pad 20 is operable by the thumb of one hand.

Furthermore, the types and dispositions of the input members are not limited to the example of the input device 10. For example, the presence or absence of the input pad 20, the positions of the four input buttons 11, and the positions of the directional pad 12 and the input sticks 17R and 17L may be changed as appropriate.

### [Exterior Member]

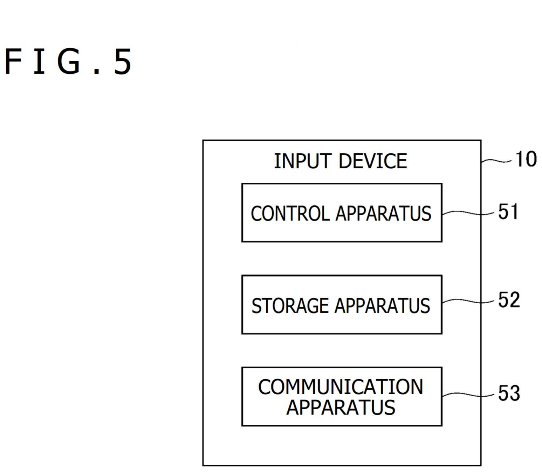

The input device 10 includes an exterior member that forms the exterior of the input device 10. The exterior member includes a case 40 accommodating the main circuit board and the battery that the input device 10 includes. The case 40 may include, for example, an upper case and a lower case combined in the up-down direction. The main circuit board is a circuit board having implemented thereon a communication apparatus 53 (see FIG. 5) configured to transmit signals indicating operations on the input members to the information processing apparatus such as a game console, a control apparatus 51 (see FIG. 5) configured to control charging and discharging of the battery, and the like. A cover may be attached to the outer side of the case 40. For example, a cover 41 (see FIG. 4) may be attached to the upper side of the case 40.

### [Input Pad]

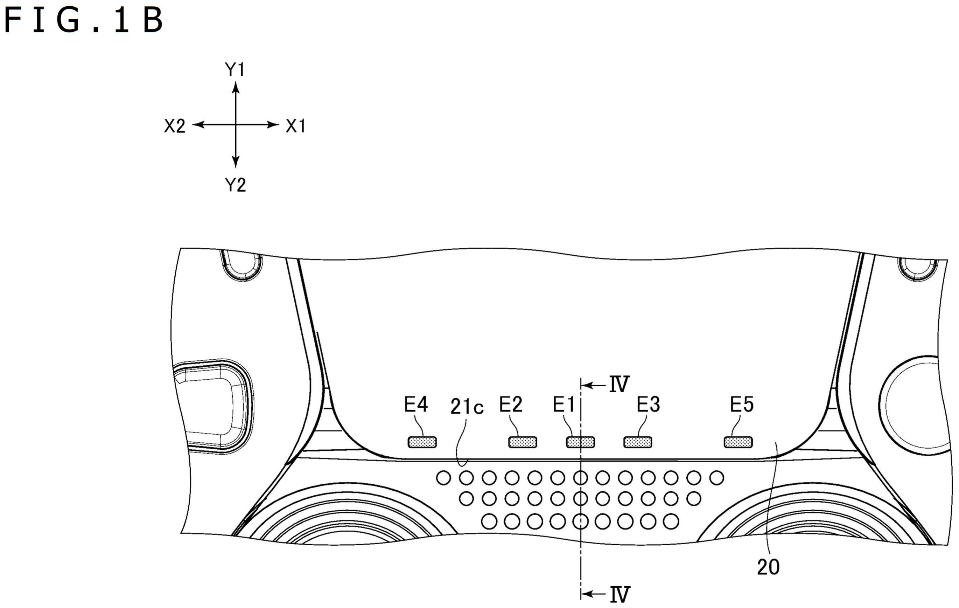

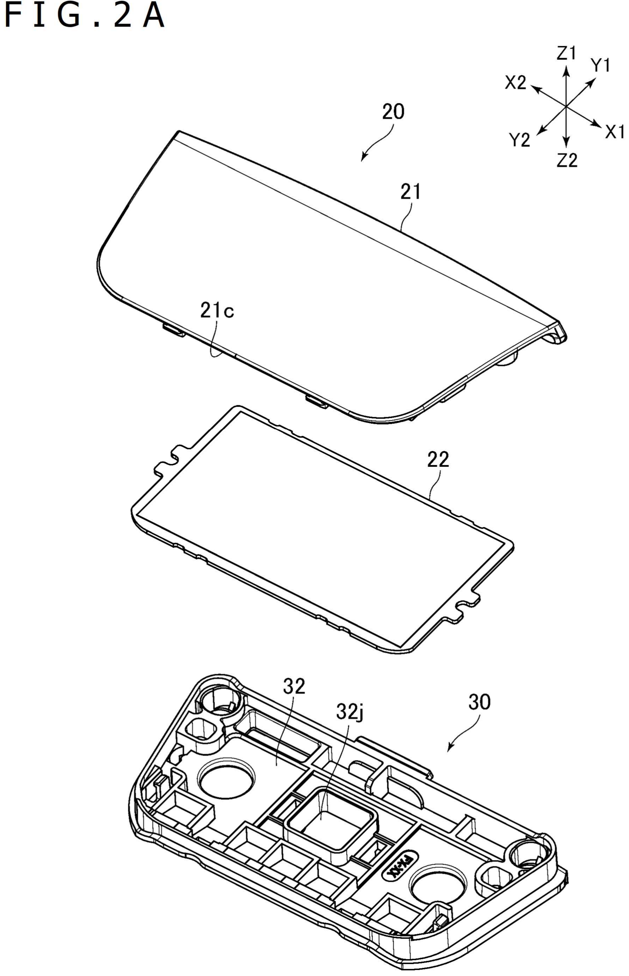

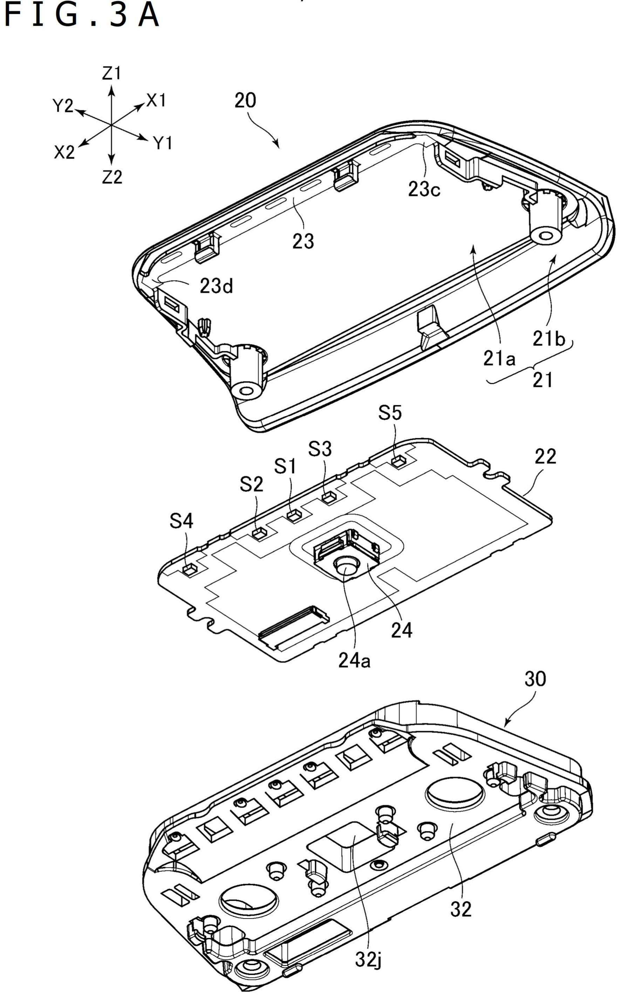

As illustrated in FIG. 2A, the input pad 20 includes an exterior plate 21, a circuit board 22, and an input pad frame 30. The exterior plate 21 is positioned at the top of the input pad 20 and forms a part of the upper surface of the central section 10M. The exterior plate 21 contains a material having light transmittance properties. Light from light sources S1 to S5 (see FIG. 3A), which are described later, passes through the exterior plate 21 upward, thereby allowing light-emitting portions E1 to E5 (see FIG. 1B) to be lit up. The circuit board 22 is attached to a lower surface 21d of the exterior plate 21. The circuit board 22 is adhered to the exterior plate 21, for example. The input pad frame 30 covers the lower side of the circuit board 22 and is attached to the lower side of the exterior plate 21.

As illustrated in FIG. 1A, the input pad 20 is disposed at the front portion of the upper surface of the central section 10M, for example. An accommodation opening 40a is formed in the case 40 (upper-side case). The input pad 20 is disposed on the inner side of this accommodation opening 40a (see FIG. 1A and FIG. 4). The exterior plate 21 may have, in addition to a portion 21a (see FIG. 3A) that forms the upper surface of the central section 10M, a portion 21b (see FIG. 3A) that forms the front surface of the central section 10M. In this case, the accommodation opening 40a of the case 40 in which the input pad 20 is disposed may open not only in the upward direction but also in the forward direction. The disposition and shape of the input pad 20 are not limited to the example of the input device 10. For example, the position of the input pad 20 may be separated from the front edge of the central section 10M in the rearward direction.

On the upper surface of the circuit board 22 (the surface in contact with the exterior plate 21), a circuit that functions as a touch sensor configured to detect, when a user's finger touches the exterior plate 21, the position at which the finger touches the exterior plate 21 may be formed. This circuit may include a plurality of detection electrodes arranged in the front-rear direction and the left-right direction. On the lower surface of the circuit board 22, a plurality of IC (Integrated Circuit) chips that function as the drive circuit of the touch sensor, the light sources S1 to S5 to be described later, the drive circuits thereof, and the like may be implemented. These drive circuits may be implemented on the main circuit board (not illustrated) accommodated in the case 40.

### [Movement of Input Pad]

The input pad 20 is capable of moving up and down and may function as a push button. The input device 10 may include a switch 24 (see FIG. 3A) for detecting the up and down movement (push operation) of the input pad 20. As illustrated in FIG. 3A, the switch 24 is attached to approximately the central part of the lower surface of the circuit board 22, for example. The switch 24 is, for example, an on/off switch. A movable portion 24a capable of moving up and down is provided on the lower surface of the switch 24.

The case 40, which forms the exterior of the input device 10, is disposed below the input pad 20 (below the input pad frame 30) and accommodates the body frame (not illustrated). When the input pad 20 is pressed and the position thereof is lowered, the movable portion 24a (see FIG. 3A) of the switch 24 hits this body frame, and a state change of the switch 24 is detected. On the basis of an output signal from the touch sensor formed on the circuit board 22 (a signal corresponding to the finger position) and an output signal from the switch 24, the position pressed by the user can be detected. The output signal from the circuit board 22 and the output signal from the switch 24 are, for example, input to a microprocessor implemented on the main circuit board and transmitted to the information processing apparatus (game console).

The input pad 20 may be biased in the upward direction by an elastic member such as a spring or rubber, which is not illustrated. The input pad 20 pressed in the downward direction may return to the initial position by the elastic force of this elastic member.

As illustrated in FIG. 3A, the input pad frame 30 covers the lower surface of the circuit board 22 and is attached to the exterior plate 21. An opening 32j is formed in the input pad frame 30. The switch 24 is exposed through this opening 32j to the lower side of the input pad frame 30, thereby facing the body frame disposed below the input pad frame 30.

Note that the disposition of the switch 24 is not limited to the example illustrated in FIG. 3A and the like. For example, the switch 24 may be attached to the body frame (not illustrated) disposed below the input pad 20, or to the main circuit board, instead of to the circuit board 22. When the input pad 20 is pressed in the downward direction, the input pad 20 (for example, the input pad frame 30) may press this switch 24.

The exterior plate 21, the circuit board 22, and the input pad frame 30 (specifically, light-diffusing portions 31 to be described later) are fixed to each other, and these move up and down integrally. Therefore, even in a case where the input pad 20 moves up and down, the relative positional relation between the light-diffusing portion 31 to be described later, the light sources S1 to S5, a light-shielding layer 23, and the exterior plate 21 does not change. Therefore, the occurrence of changes in the luminance and sizes of the light-emitting portions E1 to E5 (see FIG. 1B) can be reduced.

### [Light-Emitting Portion]

The information processing apparatus to which the input device 10 is connected executes, for example, a program for a game that can be played simultaneously by a plurality of users. The information processing apparatus assigns numbers for identifying the plurality of users to the respective users. These numbers are hereinafter referred to as user numbers. For example, in a case where three users play the game, as user numbers, "1" is assigned to the first person, "2" is assigned to the second person, and "3" is assigned to the third person. The number of users who can play simultaneously may be two or four. The game may be playable by only one person. In this case, "1" may be assigned to the user as a user number.

As illustrated in FIG. 1B, the input device 10 includes the plurality of light-emitting portions E1 to E5. The light-emitting portions E1 to E5 are provided at positions at which the light-emitting portions E1 to E5 are easily visually recognizable to the user holding the input device 10. For example, the light-emitting portions E1 to E5 are provided on the exterior plate 21 that forms the input device 10. In the input device 10 proposed in the present disclosure, the exterior plate 21 forms the input pad 20, and the light-emitting portions E1 to E5 are provided on the input pad 20. The light-emitting portions E1 to E5 may be arranged in the left-right direction along a rear edge 21c of the input pad 20. For example, the light-emitting portion E1 is provided in the center, the light-emitting portions E2 and E3 are each provided on the left or right of the light-emitting portion E1, and the light-emitting portions E4 and E5 are each provided on the left or right of the light-emitting portions E1, E2, and E3.

The input device 10 (the control apparatus 51 to be described later, see FIG. 5) allows the number of the light-emitting portions E1 to E5 corresponding to the user number to be lit up. The light-emitting portions E1 to E5 may be lit up in accordance with the following rules, for example. - User number "1": Only the light-emitting portion E1 is lit up, and the rest are off.
- User number "2": Only the light-emitting portions E2 and E3 are lit up, and the rest are off. - User number "3": Only the light-emitting portions E1, E2, and E3 are lit up, and the rest are off, or only the light-emitting portions E1, E4, and E5 are lit up, and the rest are off. - User number "4": Only the light-emitting portions E2, E3, E4, and E5 are lit up, and the rest is off. Note that the game may be playable by five people. In this case, on the input device with the user number "5," all of the light-emitting portions E1 to E5 may be lit up.

### [Light Source]

As illustrated in FIG. 3A, the input device 10 includes the plurality of light sources S1 to S5. The light sources S1 to S5 may be implemented on the lower surface of the circuit board 22. The light sources S1 to S5 may be arranged in the left-right direction along the rear edge of the circuit board 22. The light sources S1 to S5 are, specifically, LEDs (Light Emitting Diodes). Each of the light sources S1 to S5 may be an LED configured to emit white light by combining LED elements of three colors, namely, red, green, and blue or may be a single-color LED.

### [Light-Diffusing Portion]

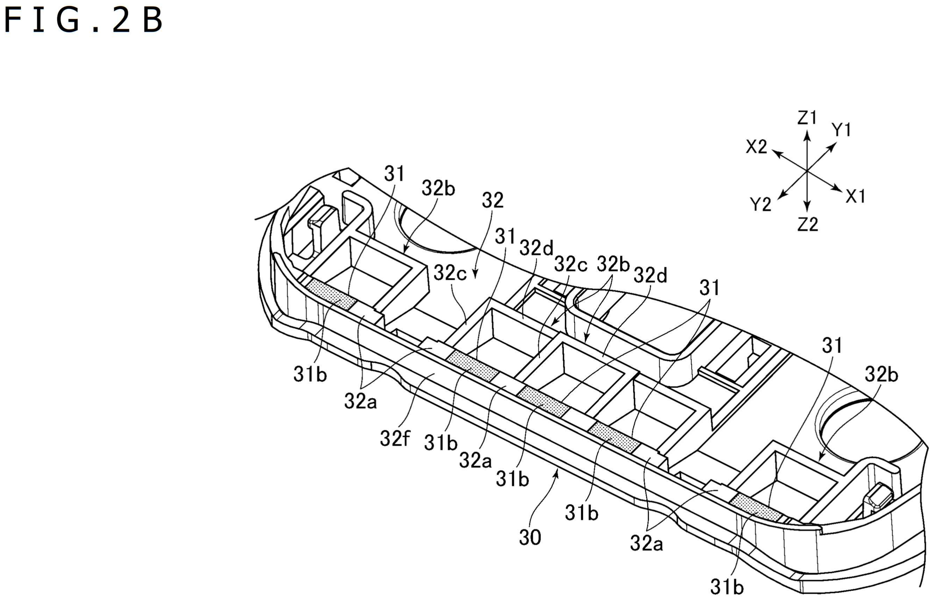

The input device 10 includes the light-diffusing portions 31 for guiding light from the light sources S1 to S5 to the light-emitting portions E1 to E5. In the example of FIG. 2B, the input device 10 includes the plurality of light-diffusing portions 31. The light sources S1 to S5 emit light toward the light-diffusing portions 31. For example, the plurality of light-diffusing portions 31 are positioned in the rearward direction of the light sources S1 to S5, and the light sources S1 to S5 are disposed to emit light in the rearward direction. The positions of the plurality of light-diffusing portions 31 (the positions of the light-diffusing portions 31 in the left-right direction) correspond to the plurality of light sources S1 to S5, respectively. Each of the light-diffusing portions 31 has a front surface 31a (incident surface, see FIG. 4) configured to receive light from a corresponding one of the light sources S1 to S5.

The light-diffusing portion 31 is, for example, resin containing minute particles that reflect light. When light from one of the light sources S1 to S5 enters the front surface 31a of the light-diffusing portion 31, the light diffuses inside the light-diffusing portion 31, with the result that the entire light-diffusing portion 31 is illuminated.

Note that, in the example illustrated in FIG. 3A and the like, the number of the plurality of light sources S1 to S5 (five in the example illustrated in FIG. 3A and the like) and the number of the plurality of light-diffusing portions 31 are the same, and the positions of the plurality of light sources S1 to S5 correspond to the plurality of light-diffusing portions 31, respectively. However, the dispositions of the light sources S1 to S5 are not limited to this. For example, light from one light source may be guided by a light-guiding tube to the two light-diffusing portions 31 (for example, the light-diffusing portions 31 corresponding to the light-emitting portions E2 and E3).

Furthermore, the number of light-emitting portions is five in the example illustrated in FIG. 1B and the like, but the number thereof is not limited to five. The number of light-emitting portions does not need to match the number of light sources and may be three or four. Furthermore, the number of light-emitting portions may be more than five.

### [Light-Shielding Layer]

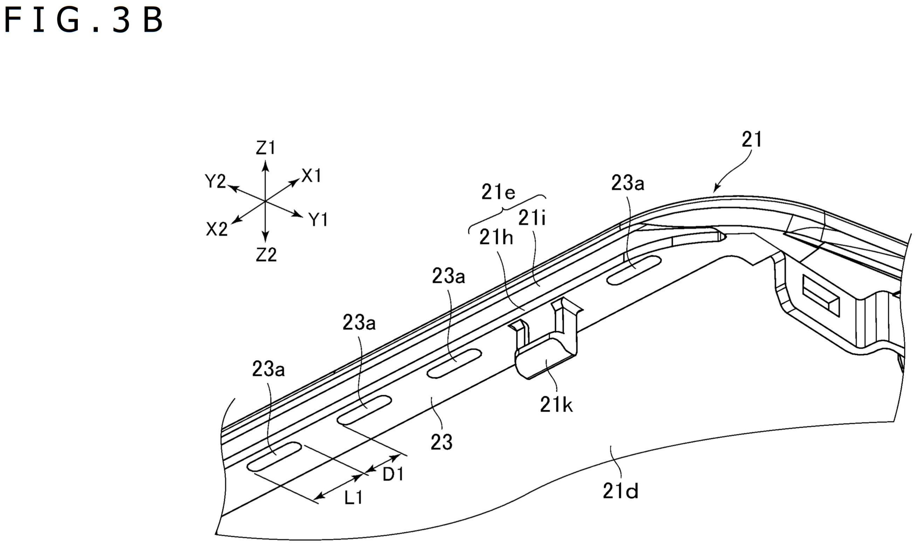

An upper surface 31b (emission surface, see FIG. 4) of the light-diffusing portion 31 faces the lower surface 21d of the exterior plate 21 in the up-down direction. As illustrated in FIG. 3B and FIG. 4, the light-shielding layer 23 is formed on the lower surface 21d of the exterior plate 21. For example, an ink with light-shielding properties (for example, black ink) is applied (printed) to the lower surface 21d of the exterior plate 21 to form the light-shielding layer 23. After the ink is applied, the ink at the positions of light-transmitting openings 23a may be removed by a laser beam, for example, to form the light-transmitting openings 23a. When the ink with light-shielding properties is applied to the lower surface 21d of the exterior plate 21, the positions of the light-transmitting openings 23a may be masked. With this, the light-shielding layer 23 having the light-transmitting openings 23a is formed without using a laser beam.

As illustrated in FIG. 3B and FIG. 4, the plurality of light-transmitting openings 23a are formed in the light-shielding layer 23. The positions of the plurality of light-transmitting openings 23a correspond to the plurality of light-diffusing portions 31, respectively. That is, the light-transmitting openings 23a are positioned directly above the light-diffusing portions 31. The size of each of the light-transmitting openings 23a is smaller than that of the upper surface 31b of each of the light-diffusing portions 31. Light having exited from the upper surface 31b of the light-diffusing portion 31 passes through the light-transmitting opening 23a and the exterior plate 21 and exits from the upper surface of the exterior plate 21, thereby allowing a corresponding one of the light-emitting portions E1 to E5 to be lit up. That is, the plurality of light-transmitting openings 23a each form a corresponding one of the plurality of light-emitting portions E1 to E5.

In this way, since the light-transmitting openings 23a of the light-shielding layer 23 form the light-emitting portions E1 to E5, compared to a structure in which the light-shielding layer 23 is not provided and light from the light-diffusing portions 31 directly passes through the exterior plate 21, the degree of freedom regarding the positions and shapes of the light-emitting portions E1 to E5 can be increased. As a result, for example, the plurality of light-emitting portions E1 to E5 can be disposed in close proximity in a narrow region.

In the example illustrated in FIG. 3B, an interval D1 between adjacent two of the light-transmitting openings 23a (light-emitting portions E1 to E5) is smaller than a length L1 of each of the light-transmitting openings 23a in the left-right direction. Furthermore, the width of each of the light-transmitting openings 23a in the front-rear direction is smaller than the length L1 of each of the light-transmitting openings 23a in the left-right direction. With such shapes and positions of the light-transmitting openings 23a, the light-emitting portions E1 to E5 can be disposed in a region with a small width in the front-rear direction secured along the edge of the circuit board 22 (touch sensor).

Furthermore, since the light-transmitting openings 23a form the light-emitting portions E1 to E5, the degree of freedom regarding the shapes of the light-diffusing portions 31 is ensured. As a result, the light-diffusing portions 31 can be designed in a shape that is easy to mold. For example, as illustrated in FIG. 2B, the light-diffusing portion 31 may be formed to be rectangular in plan view. Meanwhile, the light-transmitting opening 23a of the light-shielding layer 23 may have an approximately elliptical shape smaller than the light-diffusing portion 31 and elongated in the left-right direction.

Furthermore, since the light-shielding layer 23 is formed on the exterior plate 21 instead of on the light-diffusing portion 31, the positions of the light-emitting portions E1 to E5 on the exterior plate 21 can be maintained with high accuracy, regardless of the tolerance between the exterior plate 21 and the light-diffusing portion 31.

In the input device 10, since the light-shielding layer 23 is positioned between the light-diffusing portion 31 and the exterior plate 21, when the light sources S1 to S5 do not light up, the positions of the light-emitting portions E1 to E5 (light-transmitting openings 23a) are less visually recognizable. Therefore, in use cases where the user recognizes the information assigned to himself/herself on the basis of the positions and number of the light-emitting portions E1 to E5, the information can be effectively conveyed to the user. For example, the user can correctly recognize the user number assigned to himself/herself. In a case where the light-shielding layer 23 is formed on the upper surface of the exterior plate 21, the user can visually recognize the exposed light-transmitting openings 23a, and hence it is potentially difficult for the user to distinguish between the lit-up light-emitting portions E1 to E5 and the non-lit-up light-emitting portions E1 to E5. In contrast to this, in the input device 10, since the light-shielding layer 23 is positioned between the light-diffusing portion 31 and the exterior plate 21, the user can accurately distinguish between the lit-up light-emitting portions E1 to E5 and the non-lit-up light-emitting portions E1 to E5.

As described above, the exterior plate 21 contains a material having light transmittance properties. The exterior plate 21 may be colored. For example, the exterior plate 21 may contain a material that has light transmittance properties but is colored black. That is, the exterior plate 21 may contain a translucent material. With this, it can be more effectively prevented that the light-transmitting openings 23a are visible when the light sources S1 and S2 do not light up.

### [Shape of Light-Transmitting Opening]

As illustrated in FIG. 3B, the plurality of light-transmitting openings 23a (light-emitting portions E1 to E5, see FIG. 1B) may have the same shape. With this, compared to a case where the individual light-emitting portions E1 to E5 have different shapes, the work of forming the light-transmitting openings 23a can be facilitated.

Furthermore, when the light-emitting portions E1 to E5 have the same shape, it becomes easier to change the light-up rules for the light-emitting portions E1 to E5 or information to be presented by utilizing the light-emitting portions El to E5. For example, unlike the above-mentioned light-up rules, only the number of the left-positioned light-emitting portions E1 to E5 corresponding to the user number may be lit up. For example, in a case where the user number "1" is displayed, only the leftmost light-emitting portion E4 may be lit up, and the rest may be off. Furthermore, in a case where the user number "2" is displayed, only the two left-positioned light-emitting portions E4 and E2 may be lit up, and the rest may be off. As still another example, the remaining amount of the battery built into the input device 10 may be presented by the number of the lit-up light-emitting portions E1 to E5.

As illustrated in FIG. 3A and FIG. 3B, an engagement portion 21k may be formed between adjacent two of the light-transmitting openings 23a. The input pad frame 30 and the exterior plate 21 may be coupled to each other by this engagement portion 21k.

### [Positional Relation Between Light-Shielding Layer and Circuit Board]

As illustrated in FIG. 4, the lower surface 21d of the exterior plate 21 has a front region A2 to which the circuit board 22 is attached, and a facing region A1 facing the upper surface 31b of the light-diffusing portion 31 in the up-down direction. The facing region A1 is a region corresponding to the width of the upper surface 31b (emission surface) of the light-diffusing portion 31 in the front-rear direction. A gap may be secured between the front region A2 and the facing region A1. The light-shielding layer 23 may extend from the facing region A1 to the front region A2. With this, the leakage of light from the gap between the front region A2 and the facing region A1 can be reduced. The light-shielding layer 23 is formed such that at least a part thereof includes either the front edge or rear edge of the facing region A1.

As illustrated in FIG. 4, a front portion 23b of the light-shielding layer 23 may overlap the circuit board 22. With this, even in a case where the position of the circuit board 22 shifts in the forward direction, for example, the leakage of light can be reduced.

As illustrated in FIG. 4, the gap is secured between the front region A2 and the facing region A1 so that the positions of the light-transmitting openings 23a (light-emitting portions E1 to E5) can be separated from the rear edge of the circuit board 22 in the rearward direction. With this, when the light-emitting portions E1 to E5 are lit up, the position of the rear edge of the circuit board 22 can be visually unrecognizable.

The front region A2 to which the circuit board 22 is attached occupies most of the lower surface 21d of the exterior plate 21. The facing region A1 in which the plurality of light-transmitting openings 23a (light-emitting portions E1 to E5) are provided is a region elongated in the left-right direction (a region with a small width in the front-rear direction) along the rear edge 21c of the exterior plate 21. The shape of each of the light-transmitting openings 23a is elongated in the left-right direction (with a smaller width in the front-rear direction compared to that in the left-right direction) to match the shape of the facing region A1. With this, the narrow region on the rear side of the circuit board 22 (touch sensor) can be effectively utilized.

### [Molding of Frame Light-Shielding Portion and Light-Diffusing Portion]

As illustrated in FIG. 2B, the light-diffusing portions 31 may be integrally molded with the input pad frame 30. The input pad frame 30 has a frame light-shielding portion 32 containing resin having light-shielding properties. The frame light-shielding portion 32 may be, for example, a black resin. In FIG. 2B, the patterned portions are the light-diffusing portions 31, and the remaining portion is the frame light-shielding portion 32. The light-diffusing portions 31 and the frame light-shielding portion 32 are formed by two-color molding. The light-diffusing portions 31 and the frame light-shielding portion 32 are bonded by the chemical properties of the materials thereof.

### [Partition Wall Portion]

As illustrated in FIG. 2B, the plurality of light-diffusing portions 31 are arranged in the left-right direction along the rear edge 21c (see FIG. 2A) of the exterior plate 21. The frame light-shielding portion 32 has partition wall portions 32a each positioned between adjacent two of the light-diffusing portions 31. With this structure, the mixing of light from adjacent two of the light sources S1 to S5 can be prevented by the partition wall portions 32a.

On the other hand, in the light-shielding layer 23, as illustrated in FIG. 3B, there is no break in the light-shielding layer 23 between adjacent two of the light-transmitting openings 23a. The light-shielding layer 23 is continuous from a right end 23c (see FIG. 3A) thereof to a left end 23d (see FIG. 3A) thereof. With this, the leakage of light can be effectively reduced.

Note that, unlike the example illustrated in FIG. 3A and the like, the plurality of light-shielding layers 23 arranged in the left-right direction may be formed on the exterior plate 21. Besides, the positions of the plurality of light-shielding layers 23 may correspond to the positions of the plurality of light-diffusing portions 31, respectively. In this case, the single light-transmitting opening 23a may be formed in each of the light-shielding layers 23.

### [Accommodation Chamber Wall]

As illustrated in FIG. 2B, the frame light-shielding portion 32 has an accommodation chamber wall 32b for each of the plurality of light sources S1 to S5, for accommodating a corresponding one of the light sources S1 to S5. The accommodation chamber wall 32b has side wall portions 32c extending in the rearward direction from the partition wall portion 32a, and a front wall portion 32d positioned on the opposite side of the light-diffusing portion 31, with a corresponding one of the light sources S1 to S5 interposed therebetween. Furthermore, the accommodation chamber wall 32b has a bottom portion 32e (see FIG. 4) configured to cover the lower side of the corresponding one of the light sources S1 to S5. The accommodation chamber wall 32b is positioned in the downward direction of the circuit board 22. Each of the light sources S1 to S5 is surrounded by the light-diffusing portion 31, the partition wall portion 32a, and the accommodation chamber wall 32b. With this, the leakage of light to the outside of the input device 10 can be effectively reduced.

### [Light-Shielding Rear Wall Portion]

As illustrated in FIG. 4, the frame light-shielding portion 32 has a light-shielding rear wall portion 32f on the opposite side of the light sources S1 to S5, with the plurality of light-diffusing portions 31 interposed therebetween. The light-shielding rear wall portion 32f covers an entire rear surface 31c of the light-diffusing portion 31. With the light-shielding rear wall portion 32f, the leakage of light from the light sources S1 to S5 in the rearward direction can be reduced.

As illustrated in FIG. 4, the lower surface 21d of the exterior plate 21 has the facing region A1 facing the light-diffusing portion 31 and a rear region A3 adjacent to the upper end portion of the light-shielding rear wall portion 32f. The light-shielding layer 23 may extend from the facing region A1 to the rear region A3. With this, the leakage of light from unintended regions can be effectively reduced.

As illustrated in FIG. 4, a recessed portion 21e may be formed in the rear edge 21c of the exterior plate 21. The upper end portion of the light-shielding rear wall portion 32f may be positioned on the inner side of the recessed portion 21e. More specifically, the upper end portion of the light-shielding rear wall portion 32f may be positioned in the upward direction of the lower surface 21d of the exterior plate 21 and in the forward direction of the rear end of the exterior plate 21. The rear region A3 in which the light-shielding layer 23 is formed may be formed on the inner side of the recessed portion 21e. With this, the leakage of light to the rear side of the input pad 20 can be further effectively reduced.

As illustrated in FIG. 4, the recessed portion 21e has a rear surface 21h facing in the rearward direction and a lower surface 21i facing in the downward direction. The light-shielding layer 23 may be formed on both the rear surface 21h and the lower surface 21i. Therefore, the position of the light-shielding layer 23 formed on the rear surface 21h and the lower surface 21i is higher than the light-transmitting opening 23a. With this, the leakage of light to the rear side of the input pad 20 can be further effectively reduced.

Unlike this, the light-shielding layer 23 may be formed only on the rear surface 21h and may not be formed on the lower surface 21i. As still another example, the light-shielding layer 23 may be formed neither on the rear surface 21h nor on the lower surface 21i.

As illustrated in FIG. 4, a through-hole 32h may be formed in the bottom portion 32e of the accommodation chamber wall 32b. With this through-hole 32h, the formation (two-color molding) of the light-diffusing portion 31 and the frame light-shielding portion 32 can be facilitated. For example, after the frame light-shielding portion 32 is molded from resin, a mold is inserted into this through-hole 32h, and the material of the light-diffusing portion 31 is supplied between the mold, the light-shielding rear wall portion 32f, and the left and right partition wall portions 32a. With this, the light-diffusing portion 31 can be molded.

This through-hole 32h opens toward the opposite side of the exterior plate 21. The through-hole 32h opens toward the inner side of the case 40 of the input device 10 accommodating the main circuit board and the frame. Therefore, even if light from the light sources S1 to S5 leaks through the through-hole 32h toward the inner side of the case 40, the impact on the appearance of the input device 10 is reduced.

As described above, the approximately rectangular accommodation opening 40a is formed in the case 40 of the input device 10. The input pad 20 is disposed on the inner side of the accommodation opening 40a (see FIG. 4). As illustrated in FIG. 4, a lower portion 32i of the light-shielding rear wall portion 32f protrudes in the rearward direction. The edge of the accommodation opening 40a is positioned between the lower portion 32i of the light-shielding rear wall portion 32f and the rear edge 21c of the exterior plate 21. With this, the movable range of the input pad 20 in the up-down direction is defined.

### [Control Apparatus]

FIG. 5 is a block diagram illustrating an example of the configuration of the input device 10. The input device 10 includes the control apparatus 51, a storage apparatus 52, the communication apparatus 53, and the like. The control apparatus 51 includes a processor, and the storage apparatus 52 includes a storage element such as a memory. The communication apparatus 53 is a communication interface such as a wireless LAN (local area network) module or a Bluetooth (registered trademark) module, and performs wired or wireless data communication with the information processing apparatus (for example, a game console).

The control apparatus 51 receives a user number (for example, "1" or "2") transmitted from the information processing apparatus through the communication apparatus 53. The control apparatus 51 selectively causes the plurality of light sources S1 to S5 (see FIG. 3A) to emit light in response to the received user number. For example, the control apparatus 51 causes the number of the light sources S1 to S5 corresponding to the user information to light up in accordance with the above-mentioned light-up rules.

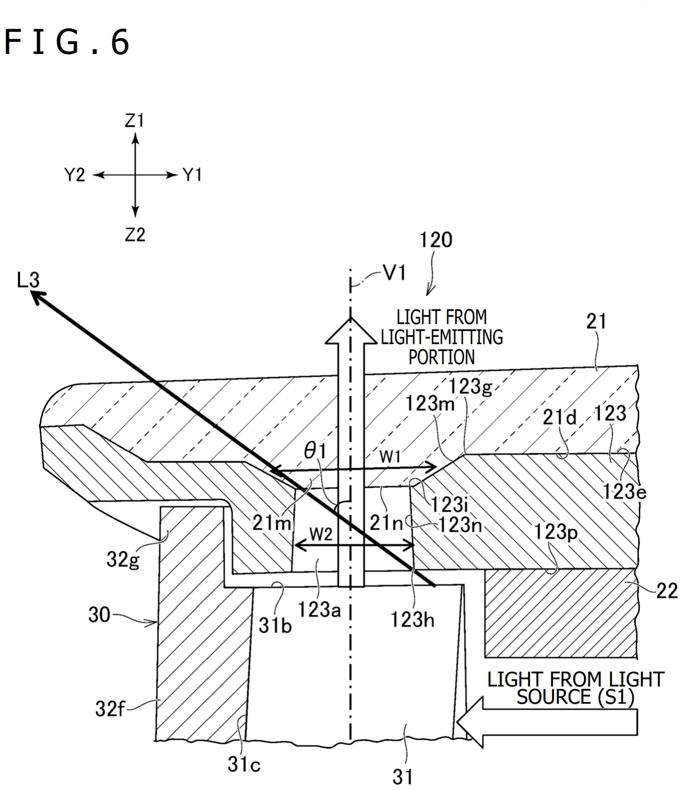

FIG. 6 is a sectional view illustrating a modified example of the input device proposed in the present disclosure, with a cutting position similar to that of the example illustrated in FIG. 4. In FIG. 6, elements similar to those of the example illustrated in FIG. 1 to FIG. 5 are denoted by the same reference signs. In the following, the differences between the example illustrated in FIG. 6 and the example illustrated in FIG. 1 to FIG. 5 are mainly described. Matters not described for the example illustrated in FIG. 6 may be the same as those of the example illustrated in FIG. 4 and the like.

An input pad 120 illustrated in FIG. 6 includes, similarly to the example illustrated in FIG. 2A and the like, the exterior plate 21, the circuit board 22, and the input pad frame 30. The input pad frame 30 has the light-diffusing portion 31 and the frame light-shielding portion 32 (see FIG. 4).

The input pad 120 includes a light-shielding layer 123 disposed between the lower surface 21d of the exterior plate 21 and the upper surface 31b of the light-diffusing portion 31. Unlike the light-shielding layer 23 illustrated in FIG. 4, the light-shielding layer 123 is a portion molded from a resin material having light-shielding properties. That is, the light-shielding layer 123 is formed by supplying a molten resin to a mold corresponding to the shape of the light-shielding layer 123 and cooling and solidifying this resin.

The light-shielding layer 123 is formed on one of the lower surface 21d of the exterior plate 21 and the upper surface 31b of the light-diffusing portion 31. In the example illustrated in FIG. 6, the light-shielding layer 123 is formed on the lower surface 21d of the exterior plate 21. The light-shielding layer 123 may be integrally molded with the exterior plate 21 by, for example, two-color molding (double molding). Two-color molding is a method of obtaining one molded product by sequentially injecting two kinds of resin of different materials into a mold. Regarding the example illustrated in FIG. 6, a molded product including the light-shielding layer 123 and the exterior plate 21 is formed by sequentially injecting a molten resin having light transmittance properties (material of the exterior plate 21) and a molten resin having light-shielding properties (material of the light-shielding layer 123) into the mold. The light-shielding layer 23 is thermally welded to the lower surface 21d of the exterior plate 21. With such a light-shielding layer 123, the positions of the light-emitting portions E1 to E5 on the exterior plate 21 can be maintained with high accuracy, regardless of the tolerance between the exterior plate 21 and the light-diffusing portion 31.

The light-shielding layer 123 may spread forward from the position between the lower surface 21d of the exterior plate 21 and the upper surface 31b of the light-diffusing portion 31. That is, the light-shielding layer 123 may have a portion positioned between the circuit board 22 and the exterior plate 21.

As illustrated in FIG. 6, a plurality of light-transmitting openings 123a are formed in the light-shielding layer 123. The positions of the light-transmitting openings 123a correspond to the plurality of light-diffusing portions 31, respectively. That is, the light-transmitting openings 123a are positioned directly above the light-diffusing portions 31. The size of each of the light-transmitting openings 123a is smaller than that of the upper surface 31b of each of the light-diffusing portions 31. Light having exited from the upper surface 31b of the light-diffusing portion 31 passes through the light-transmitting opening 123a and the exterior plate 21 and exits from the upper surface of the exterior plate 21, thereby allowing a corresponding one of the light-emitting portions E1 to E5 (FIG. 1B) to be lit up. That is, the plurality of light-transmitting openings 123a each form a corresponding one of the plurality of light-emitting portions E1 to E5.

In this way, since the light-transmitting openings 123a of the light-shielding layer 123 form the light-emitting portions E1 to E5, compared to a structure in which the light-shielding layer 123 is not provided and light from the light-diffusing portions 31 directly passes through the exterior plate 21, the degree of freedom regarding the positions and shapes of the light-emitting portions E1 to E5 can be increased. As a result, for example, the plurality of light-emitting portions E1 to E5 can be disposed in close proximity in a narrow region. Furthermore, since the light-transmitting openings 123a form the light-emitting portions E1 to E5, the degree of freedom regarding the shapes of the light-diffusing portions 31 is ensured. As a result, the light-diffusing portions 31 can be designed in a shape that is easy to mold.

### [Protruding Portion Formed on Exterior Plate]

As illustrated in FIG. 6, the exterior plate 21 has, on the lower surface 21d thereof, a plurality of protruding portions 21m protruding in the downward direction. The plurality of protruding portions 21m are each fitted inside a corresponding one of the plurality of light-transmitting openings 123a. The height of a lower end 21n of the protruding portion 21m is lower than the position of an upper surface 123e of the light-shielding layer 123. With such protruding portions 21m, the range in which the user can visually recognize the light-emitting portions E1 to E5 can be increased.

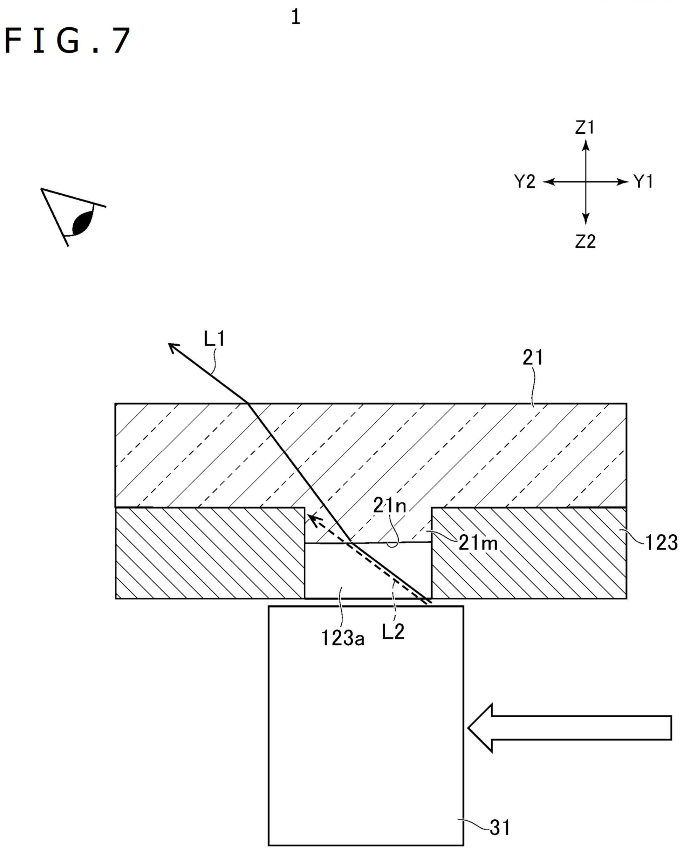

FIG. 7 is a view illustrating such a function of the protruding portion 21m. In FIG. 7, inclined surfaces 123m and 123n illustrated in FIG. 6, which are described later, are omitted. Furthermore, in FIG. 7, a solid line L1 indicates an example of a light ray that exits from the upper surface 31b of the light-diffusing portion 31 in a case where the protruding portion 21m is formed. Furthermore, in FIG. 7, a broken line L2 indicates a light ray in a case where the protruding portion 21m is not formed.

When using the input device, the user views the input pad 120 obliquely from the rear side in some cases. As indicated by the broken line L2, in a case where the protruding portion 21m is not formed, light having exited in a diagonally rearward direction from the upper surface 31b of the light-diffusing portion 31 may hit the rear-side edge of the upper end of the light-transmitting opening 123a. In this case, the user cannot visually recognize this light. In contrast to this, as indicated by the solid line L1, in a case where the protruding portion 21m is formed, light having exited in the same direction is refracted at the lower end 21n of the protruding portion 21m and reaches the pupil of the user without hitting the rear-side edge of the upper end of the light-transmitting opening 123a. That is, the user can visually recognize this light. In this way, with the protruding portion 21m, the range in which the user can visually recognize the light-emitting portions E1 to E5 can be increased.

Note that the lower end 21n of the protruding portion 21m does not reach the height of the lower surface of the light-shielding layer 123. That is, the inside of the light-transmitting opening 123a is not filled by the protruding portion 21m. With this, an extreme increase in the thickness of the exterior plate 21 at the position of the protruding portion 21m can be avoided. As a result, the formation of a recessed portion in the upper surface of the exterior plate 21 during molding of the exterior plate 21 due to shrinkage of the resin material can be reduced.

### [Upper Inclined Surface]

As illustrated in FIG. 6, the light-transmitting opening 123a has an upper edge portion 123g and a lower edge portion 123h at the respective end portions of the exterior plate 21 in the thickness direction. The upper edge portion 123g is an edge positioned at the end portion on the exterior plate 21 side, and the lower edge portion 123g is an edge positioned at the end portion on the light-diffusing portion 31 side. Furthermore, the inner peripheral surface of the light-transmitting opening 123a has an intermediate portion 123i between the upper edge portion 123g and the lower edge portion 123h. The shape of each of the light-emitting portions E1 to E5 in the plan view of the input pad 120 is defined by the shape of the light-transmitting opening 123a at the intermediate portion 123i.

As illustrated in FIG. 6, the inner peripheral surface of the light-transmitting opening 123a has the upper inclined surface 123m between the upper edge portion 123g and the intermediate portion 123i. The upper inclined surface 123m is formed such that a width W1 of the light-transmitting opening 123a in the front-rear direction (Y1-Y2 direction) gradually increases toward the upward direction. With such an upper inclined surface 123m, as indicated by a solid line L3 of FIG. 6, the restriction by the upper edge portion of the light-transmitting opening 123a on visually recognizing light emitted in a diagonally rearward direction from the light-diffusing portion 31 can be reduced. That is, the range in which the user can visually recognize the light-emitting portions E1 to E5 (viewing angle) can be further increased.

In the example illustrated in FIG. 6, the upper inclined surface 123m is formed over the entire perimeter of the light-transmitting opening 123a. That is, the upper inclined surface 123m is formed over the entire peripheral direction (360 degrees) surrounding a vertical line V1 passing through the light-transmitting opening 123a. When using the input device, the user views the input pad 120 obliquely from the rear side. Therefore, unlike the example illustrated in FIG. 6, the upper inclined surface 123m may be formed only on the rear-side portion of the light-transmitting opening 123a. In this case, the front-side portion of the inner peripheral surface (the portion facing the upper inclined surface 123m) of the light-transmitting opening 123a may be a vertical surface perpendicular to the exterior plate 21.

### [Lower Inclined Surface]

As illustrated in FIG. 6, the inner peripheral surface of the light-transmitting opening 123a has the lower inclined surface 123n between the lower edge portion 123h and the intermediate portion 123i. The lower inclined surface 123n is formed such that a width W2 of the light-transmitting opening 123a in the front-rear direction gradually increases toward the downward direction. With such a lower inclined surface 123n, for example, as indicated by the solid line L3 of FIG. 6, the angle of a light ray traveling in a diagonally rearward direction from the front portion of the light-diffusing portion 31 (an angle θ1 between the vertical line V1 and the solid line L3) can be increased. That is, the range in which the user can visually recognize the light-emitting portions E1 to E5 (viewing angle) can be further increased.

In the example illustrated in FIG. 6, the lower inclined surface 123n is also formed over the entire perimeter of the light-transmitting opening 123a. That is, the lower inclined surface 123n is formed over the entire peripheral direction (360 degrees) surrounding the vertical line V1 passing through the light-transmitting opening 123a. Unlike the example illustrated in FIG. 6, the lower inclined surface 123n may be formed only on the front-side portion of the inner peripheral surface of the light-transmitting opening 123a. In this case, the rear-side portion of the inner peripheral surface (the portion facing the lower inclined surface 123n) of the light-transmitting opening 123a may be a vertical surface perpendicular to the exterior plate 21.

### [Modified Examples]

In the example illustrated in FIG. 6, the inner peripheral surface of the light-transmitting opening 123a has the upper inclined surface 123m and the lower inclined surface 23n. Unlike this, the inner peripheral surface of the light-transmitting opening 123a may have only the upper inclined surface 123m.

Furthermore, as described above, the input device may have the inclined surfaces 123m and 123n or the protruding portion 120m, only in some (for example, only one) of the plurality of light-transmitting openings 123a corresponding to the plurality of light-emitting portions E1 to E5, respectively.

### [Light-shielding Rear Wall Portion]

As illustrated in FIG. 6, in the input pad 120 as well, the frame light-shielding portion 32 has the light-shielding rear wall portion 32f on the opposite side of the light sources S1 to S5, with the plurality of light-diffusing portions 31 interposed therebetween. The light-shielding rear wall portion 32f covers the entire rear surface 31c of the light-diffusing portion 31. The upper end portion 32g of the light-shielding rear wall portion 32f protrudes in the upward direction beyond the height of a lower surface 123p of the light-shielding layer 123 (the height of the lower edge portion 123h of the light-transmitting opening 123a). With this, the leakage of light from the light-diffusing portion 31 from the rear side of the input pad 120 can be effectively reduced. The light-shielding layer 123 passes between the upper end portion 32g of the light-shielding rear wall portion 32f and the exterior plate 21, thereby reaching the rear edge of the exterior plate 21.

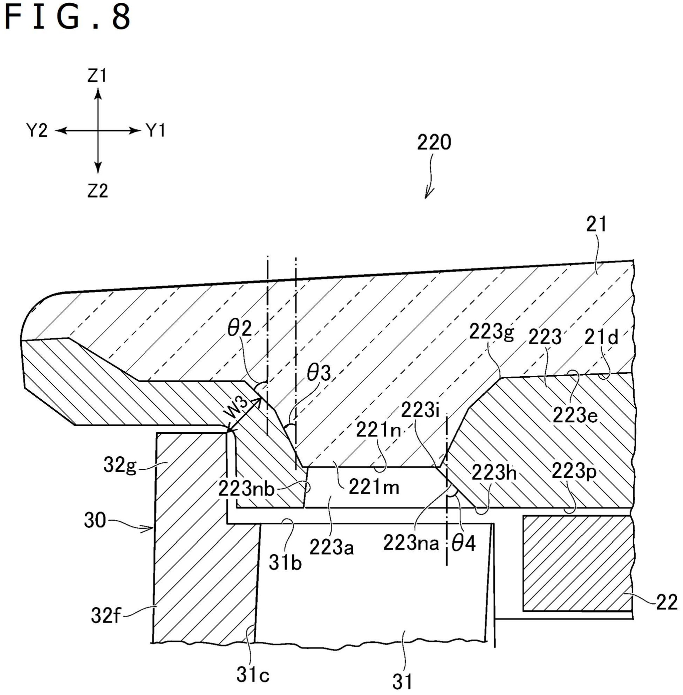

FIG. 8 is a sectional view illustrating still another modified example of the input device proposed in the present disclosure, with a cutting position similar to that of the example illustrated in FIG. 4. In FIG. 8, elements similar to those of the example illustrated in FIG. 6 are denoted by the same reference signs. In the following, the differences between the example illustrated in FIG. 8 and the example illustrated in FIG. 6 are mainly described. Matters not described for the example illustrated in FIG. 8 may be the same as those of the example illustrated in FIG. 1 to FIG. 5 or those of the example illustrated in FIG. 6.

An input pad 220 illustrated in FIG. 8 includes, similarly to the example illustrated in FIG. 6, a light-shielding layer 223 disposed between the lower surface 21d of the exterior plate 21 and the upper surface 31b of the light-diffusing portion 31. The light-shielding layer 223 is a portion molded from a resin material having light-shielding properties. That is, the light-shielding layer 223 is formed by supplying a molten resin to a mold corresponding to the shape of the light-shielding layer 223 and cooling and solidifying this resin.

As illustrated in FIG. 8, a plurality of light-transmitting openings 223a are formed in the light-shielding layer 223. The plurality of light-transmitting openings 223a each form a corresponding one of the plurality of light-emitting portions E1 to E5. The exterior plate 21 has, on the lower surface 21d thereof, a plurality of protruding portions 221m protruding in the downward direction. The plurality of protruding portions 221m are each fitted inside a corresponding one of the plurality of light-transmitting openings 223a. The height of a lower end 221n of the protruding portion 221m is lower than the position of an upper surface 223e of the light-shielding layer 223. With such a protruding portion 221m, as described with reference to FIG. 7, the range in which the user can visually recognize the light-emitting portions E1 to E5 can be increased.

In the example illustrated in FIG. 8, unlike the example illustrated in FIG. 6, the height of the lower end 221n of the protruding portion 221m is lower than the middle between the upper surface 223e and a lower surface 223p of the light-shielding layer 223. That is, the length of the lower end 221n in the up-down direction is larger than half the distance between the upper surface 223e and the lower surface 223p of the light-shielding layer 223.

### [Upper Inclined Surface]

As illustrated in FIG. 8, the inner peripheral surface of the light-transmitting opening 223a has, similarly to the light-transmitting opening 123a illustrated in FIG. 6, an upper edge portion 223g, a lower edge portion 223h, and an intermediate portion 223i. The inner peripheral surface of the light-transmitting opening 223a has upper inclined surfaces 223ma and 223mb between the upper edge portion 223g and the intermediate portion 223i. The upper inclined surfaces 223ma and 223mb are formed such that the width of the light-transmitting opening 123a in the front-rear direction (Y1-Y2 direction) gradually increases toward the upward direction. With such upper inclined surfaces 223ma and 223mb, the restriction by the upper edge portion of the light-transmitting opening 223a on visually recognizing light emitted in a diagonally rearward direction from the light-diffusing portion 31 can be reduced.

As illustrated in FIG. 8, the upper inclined surfaces 223ma and 223mb have an upper portion 223ma and a lower portion 223_mb. An angle θ2 of the upper portion 223ma to the vertical line is different from an angle θ3 of the lower portion 223mb to the vertical line. More specifically, the angle θ2 of the upper portion 223ma is larger than the angle θ3 of the lower portion 223mb. With such upper inclined surfaces 223ma and 223mb, the angle of a light ray traveling in a diagonally rearward direction from the light-diffusing portion 31 can be further increased. That is, the range in which the user can visually recognize the light-emitting portions E1 to E5 (viewing angle) can be further increased. Furthermore, a distance W3 between the corner portion of the upper end portion 32g of the light-shielding rear wall portion 32f and the upper inclined surfaces 223ma and 223mb can be secured, with the result that the molding of the light-shielding layer 223 using resin can be facilitated.

In the example illustrated in FIG. 8 as well, the upper inclined surfaces 223ma and 223mb are formed over the entire perimeter of the light-transmitting opening 223a. That is, the upper inclined surfaces 223ma and 223mb are formed over the entire peripheral direction (360 degrees) surrounding a vertical line passing through the light-transmitting opening 223a. Unlike the example illustrated in FIG. 8, the upper inclined surfaces 223ma and 223mb may be formed only on the rear-side portion of the light-transmitting opening 123a.

### [Lower Inclined Surface]

As illustrated in FIG. 8, the inner peripheral surface of the light-transmitting opening 223a has lower inclined surfaces 223na and 223nb between the lower edge portion 223h and the intermediate portion 223i. The lower inclined surfaces 223na and 223nb are formed such that the width of the light-transmitting opening 123a in the front-rear direction gradually increases toward the downward direction. With such lower inclined surfaces 223na and 223nb, the angle of a light ray traveling in a diagonally rearward direction from the front portion of the light-diffusing portion 31 can be increased.

In the example illustrated in FIG. 8, the lower inclined surface 223na is formed on the front side of the inner peripheral surface of the light-transmitting opening 223a, and the lower inclined surface 223nb is formed on the rear side of the inner peripheral surface of the light-transmitting opening 223a. An angle θ4 between the vertical line and the lower inclined surface 223na is larger than the angle between the vertical line and the lower inclined surface 223nb. With this structure, as indicated by the solid line L3 of FIG. 6, the angle of a light ray traveling in a diagonally rearward direction from the front portion of the light-diffusing portion 31 can be further increased. Note that, unlike the example illustrated in FIG. 8, the lower inclined surface 223nb on the rear side may not necessarily be formed.

### [Others]

Note that the input device proposed in the present disclosure is not limited to the input device 10 described above.

For example, the input device 10 has the plurality of light-diffusing portions 31. However, the number of the light-diffusing portions 31 may be one. In this case, the length of the light-diffusing portion 31 may correspond to the overall length of the plurality of light-diffusing portions 31 illustrated in FIG. 2B and the like.

Furthermore, the frame light-shielding portion 32 and the light-diffusing portion 31 of the input pad frame 30 may be formed separately. In this case, the light-diffusing portion 31 may be attached to the frame light-shielding portion 32 by claws or hooks (engagement portions).

Furthermore, the light-shielding layer 23, 123, or 223 may be formed on the upper surface 31b (emission surface) of the light-diffusing portion 31 instead of on the lower surface 21d of the exterior plate 21.

### [Conclusion]

(1) The input device proposed in the present disclosure includes an exterior plate containing a material having light transmittance properties, the exterior plate having a first surface forming a part of an outer surface of the input device, and a second surface facing opposite to the first surface in a first direction that is a thickness direction of the exterior plate, a plurality of light sources, one or a plurality of light-diffusing portions having a third surface facing the second surface of the exterior plate in the first direction and configured to receive light from the plurality of light sources, a light-shielding layer formed on one of the second surface of the exterior plate and the third surface of the one or plurality of light-diffusing portions, the light-shielding layer having formed therein a plurality of openings each forming a corresponding one of a plurality of light-emitting portions, and a control apparatus configured to selectively cause the plurality of light sources to emit light on the basis of information to be presented to a user.
(2) In the input device according to (1), a circuit board is attached to the second surface of the exterior plate. The second surface of the exterior plate has a first region facing the third surface of the one or plurality of light-diffusing portions and a second region to which the circuit board is attached. The light-shielding layer extends from the first region to the second region.
(3) In the input device according to (1) or (2), the plurality of light sources emit light toward the one or plurality of light-diffusing portions in a second direction along the second surface. A light-shielding wall portion containing a light-shielding material is disposed on an opposite side of the plurality of light sources, with the one or plurality of light-diffusing portions interposed therebetween. The second surface of the exterior plate has a first region facing the third surface of the one or plurality of light-diffusing portions and a third region adjacent to an end portion of the light-shielding wall portion. The light-shielding layer extends from the first region to the third region.
(4) In the input device according to (3), a recessed portion in which the end portion of the light-shielding wall portion is disposed is formed in the exterior plate. The light-shielding layer is formed on an inner surface of the recessed portion of the exterior plate, the inner surface being the third region.
(5) In the input device according to any one of (1) to (4), a frame is attached to the second surface of the exterior plate, and the frame has the plurality of light-diffusing portions and a partition portion containing a light-shielding material between adjacent two of the light-diffusing portions. The plurality of light sources each face a corresponding one of the plurality of light-diffusing portions.
(6) In the input device according to any one of (1) to (5), a distance between two adjacent light-emitting portions among the plurality of light-emitting portions is smaller than a length of one of the light-emitting portions.
(7) In the input device according to any one of (1) to (6), the plurality of light-emitting portions have the same shape.
(8) In the input device according to any one of (1) to (7), a circuit board attached to the second surface of the exterior plate is included. The second surface of the exterior plate has a first region facing the third surface of the one or plurality of light-diffusing portions and a second region to which the circuit board is attached. The first region is defined between the second region and an outer edge of the exterior plate. The plurality of light-emitting portions are arranged in a direction along the outer edge of the exterior plate. A length of each of the light-emitting portions in the direction along the outer edge is smaller than a width of each of the light-emitting portions in a direction orthogonal to the outer edge.
(9) In the input device according to any one of (1) to (8), the exterior plate and the frame form an input pad.
(10) In the input device according to any one of (1) to (9), the light-shielding layer is formed on the second surface of the exterior plate.
(11) In the input device according to any one of (1) to (10), the exterior plate has, on the second surface, a plurality of protruding portions each fitted into a corresponding one of the plurality of openings formed in the light-shielding layer.
(12) In the input device according to any one of (1) to (11), each of the plurality of openings formed in the light-shielding layer has a first edge portion at one end portion in the first direction, a second edge portion at an end portion on an opposite side in the first direction, and an intermediate portion between the one end portion and the other end portion, and at least one opening among the plurality of openings has, on an inner peripheral surface thereof, a first inclined surface positioned between the intermediate portion and the first edge portion and inclined with respect to the first direction.
(13) In the input device according to (12), the first edge portion is an edge portion on a side of the exterior plate of each of the plurality of openings.
(14) In the input device according to (13), the at least one opening has, on the inner peripheral surface thereof, a second inclined surface positioned between the intermediate portion and the second edge portion and inclined with respect to the first direction.

## Claims

1. An input device comprising:
an exterior plate containing a material having light transmittance properties, the exterior plate having a first surface forming a part of an outer surface of the input device, and a second surface facing opposite to the first surface in a first direction that is a thickness direction of the exterior plate;
a plurality of light sources;
one or a plurality of light-diffusing portions having a third surface facing the second surface of the exterior plate in the first direction and configured to receive light from the plurality of light sources;
a light-shielding layer formed on one of the second surface of the exterior plate and the third surface of the one or plurality of light-diffusing portions, the light-shielding layer having formed therein a plurality of openings each forming a corresponding one of a plurality of light-emitting portions; and
a control apparatus configured to selectively cause the plurality of light sources to emit light on a basis of information to be presented to a user.

2. The input device according to claim 1, further comprising:
a circuit board attached to the second surface of the exterior plate, wherein the second surface of the exterior plate has a first region facing the third surface of the one or plurality of light-diffusing portions and a second region to which the circuit board is attached, and
the light-shielding layer extends from the first region to the second region.

3. The input device according to claim 1, wherein
the plurality of light sources emit light toward the one or plurality of light-diffusing portions in a second direction along the second surface,
a light-shielding wall portion containing a light-shielding material is disposed on an opposite side of the plurality of light sources, with the one or plurality of light-diffusing portions interposed therebetween,
the second surface of the exterior plate has a first region facing the third surface of the one or plurality of light-diffusing portions and a third region adjacent to an end portion of the light-shielding wall portion, and
the light-shielding layer extends from the first region to the third region.

4. The input device according to claim 3, wherein
a recessed portion in which the end portion of the light-shielding wall portion is disposed is formed in the exterior plate, and
the light-shielding layer is formed on an inner surface of the recessed portion of the exterior plate, the inner surface being the third region.

5. The input device according to claim 1, wherein
a frame is attached to the second surface of the exterior plate, the frame has the plurality of light-diffusing portions and a partition portion containing a light-shielding material between adjacent two of the light-diffusing portions, and
the plurality of light sources each face a corresponding one of the plurality of light-diffusing portions.

6. The input device according to claim 1, wherein
a distance between two adjacent light-emitting portions among the plurality of light-emitting portions is smaller than a length of one of the light-emitting portions.

7. The input device according to claim 1, wherein
the plurality of light-emitting portions have a same shape.

8. The input device according to claim 1, further comprising:
a circuit board attached to the second surface of the exterior plate, wherein
the second surface of the exterior plate has a first region facing the third surface of the one or plurality of light-diffusing portions and a second region to which the circuit board is attached,
the first region is defined between the second region and an outer edge of the exterior plate,
the plurality of light-emitting portions are arranged in a direction along the outer edge of the exterior plate, and
a length of each of the light-emitting portions in the direction along the outer edge is smaller than a width of each of the light-emitting portions in a direction orthogonal to the outer edge.

9. The input device according to claim 5, wherein
the exterior plate and the frame form an input pad.

10. The input device according to claim 1, wherein
the light-shielding layer is formed on the second surface of the exterior plate.

11. The input device according to claim 10, wherein
the exterior plate has, on the second surface, a plurality of protruding portions each fitted into a corresponding one of the plurality of openings formed in the light-shielding layer.

12. The input device according to claim 1, wherein
each of the plurality of openings formed in the light-shielding layer has a first edge portion at one end portion in the first direction, a second edge portion at an end portion on an opposite side in the first direction, and an intermediate portion between the one end portion and the other end portion, and
at least one opening among the plurality of openings has, on an inner peripheral surface thereof, a first inclined surface positioned between the intermediate portion and the first edge portion and inclined with respect to the first direction.

13. The input device according to claim 12, wherein
the first edge portion is an edge portion on a side of the exterior plate of each of the plurality of openings.

14. The input device according to claim 13, wherein
the at least one opening has, on the inner peripheral surface thereof, a second inclined surface positioned between the intermediate portion and the second edge portion and inclined with respect to the first direction.
